# EUROPEAN PATENT SPECIFICATION

(11) **EP 3 091 510 B1**
(45) Date of publication and mention of the grant of the patent: **07.07.2021**
(21) Application number: 15166587.4
(22) Date of filing: 06.05.2015
(51) Int. Cl.: G06T 11/00, G06T 11/60

(54) **METHOD AND SYSTEM FOR PRODUCING OUTPUT IMAGES**
VERFAHREN UND SYSTEM ZUR HERSTELLUNG VON AUSGABEBILDERN
PROCÉDÉ ET SYSTÈME DE PRODUCTION D'IMAGES DE SORTIE

(43) Date of publication of application: 09.11.2016
(73) Proprietor: Reactive Reality AG, 8010 Graz (AT)
(72) Inventor: Hauswiesner, Stefan, 8182 Puch bei Weiz (AT); Grasmug, Philipp, 8010 Graz (AT)
(74) Representative: Epping - Hermann - Fischer

(56) References cited:
- EP-A1- 2 797 053
- US-B1- 6 661 906
- US-B1- 8 566 714
- STEFAN HAUSWIESNER ET AL: "Virtual Try-On through Image-Based Rendering", IEEE TRANSACTIONS ON VISUALIZATION AND COMPUTER GRAPHICS, IEEE SERVICE CENTER, LOS ALAMITOS, CA, US, vol. 19, no. 9, September 2013 (2013-09), pages 1552-1565, XP011520331, ISSN: 1077-2626, DOI: 10.1109/TVCG.2013.67
- YAMADA HIROKI ET AL: "Image-Based Virtual Fitting System with Garment Image Reshaping", 2014 INTERNATIONAL CONFERENCE ON CYBERWORLDS, IEEE, 6 October 2014 (2014-10-06), pages 47-54, XP032703300, DOI: 10.1109/CW.2014.15 [retrieved on 2014-12-09]

## Description

The invention relates to a method and to a system, each for producing output images based on a user image and a base image.

For example in augmented reality, AR, applications it is a common desire to combine various image sources for producing AR output images. Conventional systems combine video streams with previously modeled 3-dimensional representations. Modeling is a relatively long and complicated task performed by specialists, which hampers wide-spread AR usage.

Stefan Hauswiesner et al: "Virtual Try-On through Image-Based Rendering", IEEE Transactions on Visualization and Computer Graphics vol. 19, no. 9, September 2013, pages 1552-1565 discloses a method combining image-based renderings of the user and previously recorded garments. It transfers the appearance of a garment recorded from one user to another by matching input and recorded frames, image-based visual hull rendering, and online registration methods.

Document US 6,661,906 B1 discloses an image creating apparatus for creating plural kinds of images which are different in each image class about brushwork and expression based on data of a single image, which includes a face component library and a rule library. The face component library is composed of image libraries of the respective face components such as eyes, noses, mouths and so forth each of which stores a plurality of image groups of the respective face components. In the same manner, the rule library is composed of a select rule library, a deform rule library and an arrange rule library which store rule groups consisting of a plurality of rules for each face component.

An object to be achieved is to provide an improved concept for AR image generation that is more efficient and can be performed by non-expert users.

This object is achieved with the subject-matter of the independent claims. Embodiments and developments of the improved concept are subject of the dependent claims.

The improved concept is based on the idea that one or more output images are produced based on one or more images, e.g. image sequences, provided by a user and one or more images from an image database. The one or more images from the image database are used as base images. The image database comprises a plurality of processed images, wherein for each of said processed images a rule entry exists in each of a placing rule database and a composition rule database. For example, the rule entries in the placing rule database and the composition rule database are generated in advance through processing of the images in the image database. In some implementations the generation of the rule entries can also be based on a larger number of images that finally are not part of the image database and hence are only used for improving the rule generation of each database image.

Through a respective rule entry in the placing rule database, the system knows e.g. how to embed the user image into the selected base image in a most natural looking way. The corresponding rule entry in the composition rule database defines how image parts or pixels of the base image relate to pixels of the user image, e.g. what image parts should be defined as background and which image parts should be defined as foreground. Based on these rules, defined for each base image, an arbitrary user image can be combined to produce a realistic output image.

In an example implementation of a method for producing output images according to the improved concept, after selecting the base image, an output image is produced by placing the user image or at least a section of the user image into an image slot of the selected base image. Said image slot is defined by a placing rule associated with said base image in the placing rule database. Production of the output image further comprises compositing the user image or the section of the user image with said base image with respect to an overlap relation of pixels of said base image and pixels of the user image. Said overlap relation is defined by a composition rule associated with said base image in the composition rule database. Hence, the production of the output image can be based on the base image itself and the rules associated with said base image. The user image can be any conventional image that does not need to be pre-processed as a prerequisite for the output image production.

Depending on the desired application, user images can be, for example, portrait photos of persons if these are to be combined with a base image to be selected. For example, such a base image selected from the image database could contain an image of a car with the driver being visible. Based on the placing rule and the composition rule associated with the base image, it is known how to embed the person's portrait image into the car image so that it appears as if the user was driving it. This user-car scenario is only taken as an example application of the improved concept. A method according to the improved concept namely can be applied to all kinds of augmented reality, AR, scenarios such as in situ product visualizations with cars, furniture, paintings, etc. virtual paint jobs of buildings, or the like. The method according to the improved concept can also be used for immersion in virtual environments, like taking a virtual walk at the beach, human-centred AR such as the virtual try-on of clothes, accessories, hairstyles and makeup etc. It also works for combinations of the above, for example virtually trying on a new dress in a car next to an arbitrary touristic site.

According to the invention, the placing rule defines a position of the image slot within the selected base image and further defines a probability distribution of placement of the user image within the image slot. The placing rule can further define other conditions, like a placement preference of the user image within the image slot. For example, the placing rule can also define an arrangement order of an object within the image slot or a material consistency of at least a section of the image slot. It is not necessary for each condition that may be part of the placing rule to be fulfilled in a strict manner. In contrast, the method can deliberate between several rule conditions and can find the highest coincidence with all rules or conditions when producing the output image.

For example, the probability distribution of placement of the user image within the image slot does not define an exact placing position but defines where placement is possible to a certain degree and where not. For example, the placing rule may define placement preferences within the associated base image. As to the material consistency, materials can be assigned to images or individual pixels. For example, soft materials can stretch or bend or be compressed. Rigid materials can, for example, only be rotated, moved and scaled.

Depending on the scene of the base image, placement can be as simple as inserting objects at fixed locations or much more complex. Non-rigid or piecewise rigid scenes usually have the complexity of non-linear systems of equations with a large number of variables. Solving such problems can be achieved by, for example, non-rigid image alignment methods, physical simulation, dynamic programming or differential mesh editing. Placement can also involve image warping: the process of reprojecting an image to a new viewpoint. This may be advantageous to generate smooth AR sequences during camera motion. When generating the databases, which will be explained in more detail later, machine learning can be used to determine which metrics (silhouettes, depth values, gradients, labels, distance transforms, camera position, previous alignment results...) should guide these algorithms.

The composition rule database may store how objects overlap to achieve a correct compositing of elements of a desired scene. For example, an overlap can be resolved by depth buffering when depth values are available for each scene component. Hence, in some embodiments, the composition rule may define a depth order of portions of the selected base image and the user image and/or a transparency of portions of said base image and the user image. In addition, or as an alternative, the composition rule associated with said base image may define a possible colour adaptation of portions of said base image and the user image and/or a possible illumination change of portions of said base image and the user image.

In some implementations there may be some interrelation between the composition rule of a base image and the placing rule with respect to a definition of a material consistency. For example, materials can also define possible colour adaptations, blending and transparency for compositing.

Slots, placement preferences and materials are examples for rules that drive how objects are placed, aligned and deformed in the method according to the improved concept. The rules associated with the selected base image may be determined by machine learning from the image database or other image data sets or may be assigned by manual input during the database generation. The improved concept can be used for various different scenes, wherein such scenes are for example defined by what objects, background, foreground, etc., can be seen on the final output image. Depending on the scene, placement can be as simple as inserting objects at fixed locations or can be much more complex.

Non-rigid or piece-wide rigid scenes usually have the complexity of non-linear systems of equations with a large number of variables. Solving such non-linear systems can be achieved, for example, by non-rigid image alignment methods, physical simulation, dynamic programming or differential mesh editing, to name only a few. Placement can also involve image warping during which process an image is reprojected to a new viewpoint. This can be desirable to generate smooth AR sequences during camera motion, if a sequence of user image and base images is processed to produce a sequence, in particular a video sequence of output images. The underlying metrics are stored in the rule databases, the generation of which will be explained in more detail later.

In some embodiments, the placing step is further based on an alignment rule associated with a selected base image and the placing database, wherein the alignment rule defines a preferred position of the user image within the image slot. As an alternative or in addition, the placing step can be based on a deformation rule associated with the selected base image in the placing rule database, wherein the deformation rule defines possible deformations of the user image within the image slot.

In some implementations, further to the placing rule database and the composition rule database, a space filling rule database exists which, at least for some of the processed images stored in the image database, has associated space filling rules.

For example, in some implementations, for the selected base image a rule entry exists in the space filling rule database. In such a case producing the output image further comprises filling at least a section of the image slot according to a space filling rule associated with that base image in the space filling rule database, based on the user image or the section of the user image and/or on said base image.

For example, the space filling rule defines handling of a section of the base image that cannot be covered based on the user image. For example, some areas need to be filled to avoid showing background. Other areas need to be filled to avoid showing image features that are undesired.

The space filling step may comprise the deformation and/or transformation of the user image, a non-rigid image alignment based on the user image and/or said base image, a physical simulation, dynamic programming, in-painting, repeating, differential mesh editing, image warping of the user image or any combination of the latter actions.

In some implementations the user image and/or the base image contain depth information and/or three-dimensional information. In such cases, the output image can be produced having depth information or three-dimensional information as well. The depth information and/or three-dimensional information may be used in the compositing step and/or the composition rule, such that these are based on the depth information and/or three-dimensional information.

In some implementations the selecting step and the producing step are performed for each base image of a set or a sequence of base images from the image database, such that a set or sequence of output images is produced based on the user image. For example, such a sequence may be a video sequence or the like. For example, the same user image may be used for a number of base images of this sequence, if e.g. the viewing angle of the user image fits to the sequence of base images. It is apparent for the skilled person that for longer sequences of base images, the procedure can be performed with different user images for e.g. sub-sequences of base images.

In some implementations the user image is selected from a set or sequence of selectable user images based on the selected base image. Preferably, one of the set or sequence of user images is selected that fits best into the selected base image.

For example, quality information is output based on an evaluation of the selectable user images until one of the selectable user images is selected as the user image. For example, this can be performed automatically or by guiding the user with respective instructions and the quality information.

Image sequences can be captured, for example, by a camera of a user. Images of a sequence can be embedded in slots to generate AR videos or live views. Images can be used to query the database to find best matching images or slots. Image data like features, silhouettes, gradients, detected objects etc. and meta data like position, orientation etc. can be used to guide the search. Images in the database can also be part of a sequence. Still user images can be placed in sequences of slot positions to animate them.

The method according to the improved concept can also be performed in a nested fashion, i.e. iteratively with e.g. different images. For example, at least one rule out of the placing rule, the composition rule and, if present, the space filling rule, which are associated with the selected base image, are associated with the output image. A further output image is produced by merging the output image with a further image based at least on the rule or rules associated with the output image. For example, the user image in a first step, so to say inherits one or more of the rules of the selected base image.

The further image mentioned above may be selected as a further base image from the image database. In this case, producing the further output image comprises placing the output image or at least a section of the output image into an image slot of said further base image, said image slot being defined by a placing rule associated with said further base image in the placing rule database and compositing the output image or the section of the output image with that further base image with respect to an overlap relation of pixels of said further base image and pixels of the output image, said overlap relation being defined by a composition rule associated with a further base image and the composition rule database.

The improved concept may also be implemented in a system for producing output images based on a user image in a base image, wherein the system comprises a processor that is configured for selecting the base image from an image database that comprises a plurality of processed images. For each of said processed images a rule entry exists in each of a placing rule database and a composition rule database. The processor is further configured to produce the output image by placing the user image, or at least a section of the user image, into an image slot of the selected base image. Said image slot is defined by a placing rule associated with said base image in the placing rule database. Producing the output image further comprises compositing the user image or the section of the user image with that base image with respect to an overlap relation of pixels of said base image and pixels of the user image. Said overlap relation is defined by a composition rule associated with said base rule and a composition rule database.

Further embodiments of the system will become apparent for the skilled person from the description of the various embodiments of the method described above.

In order to perform one of the various embodiments of the method according to the improved concept or to operate a system according to the improved concept, the image database and the various rule databases have to be available. For example, these databases can be generated by processing and evaluating a plurality of images that partly become elements of the image database and are all used for generating the rules in the rule databases.

For example, a method for generating image-related databases according to the improved concept comprises the processing of a plurality of input images. A subset of the plurality of input images is selected. The subset can be the full set or a real subset. For each input image of said subset, said input image is stored in the image database. Based on the processing, a placing rule is derived and associated with said input image in a placing rule database. Furthermore, a composition rule is derived based on the processing and associated with said input image in a composition rule database.

The image database, the placing rule database and the composition database are particularly designed to be used in a method or a system for producing output images as described above. In some implementations, also a space filling rule is derived based on the processing and associated with said input image in a space filling rule database. However, this may not be mandatory for each image of the subset.

Generally, whereas only the images of the subset are placed in the image database, the processing of the full set of input images is used for deriving the rules and filling the rule databases.

For example, in an embodiment of the method for generating image-related databases, an output image that is produced with a method for producing output images as described above, is used for updating one or more entries in at least one of the image database, the placing rule database and the composition rule database. Hence, produced output images can serve as a feedback input for the overall system, respectively method.

In the following the invention will be described in more detail with the aid of the drawings.

In the drawings:
- Figure 1: shows an example block diagram of an embodiment of a method for producing output images according to the improved concept,
- Figure 2: shows an example of an output image production,
- Figure 3: shows a further example of an output image production,
- Figure 4: shows an example block diagram of a method for generating image related databases according to the improved concept,
- Figure 5: shows a further example of an output image production,
- Figure 6: shows a further example of an output image production,
- Figure 7: shows a further example of an output image production,
- Figure 8: shows a further example of an output image production,
- Figure 9: shows a further example of an output image production, and
- Figure 10: shows an example system for producing output images according to the improved concept.

In the following various example implementations of the improved concept in the form of the method for image production and the method for generating image-related databases will be shown. It will particularly be described how one or more user images are combined with base images stored in an image database by application of specific rules associated with said base images. Said rules are stored in respective rule databases, the generation of which is performed e.g. by the respective method according to the improved concept mentioned before. It will further be described how the image data base and the rule databases are built or generated from a plurality of input images.

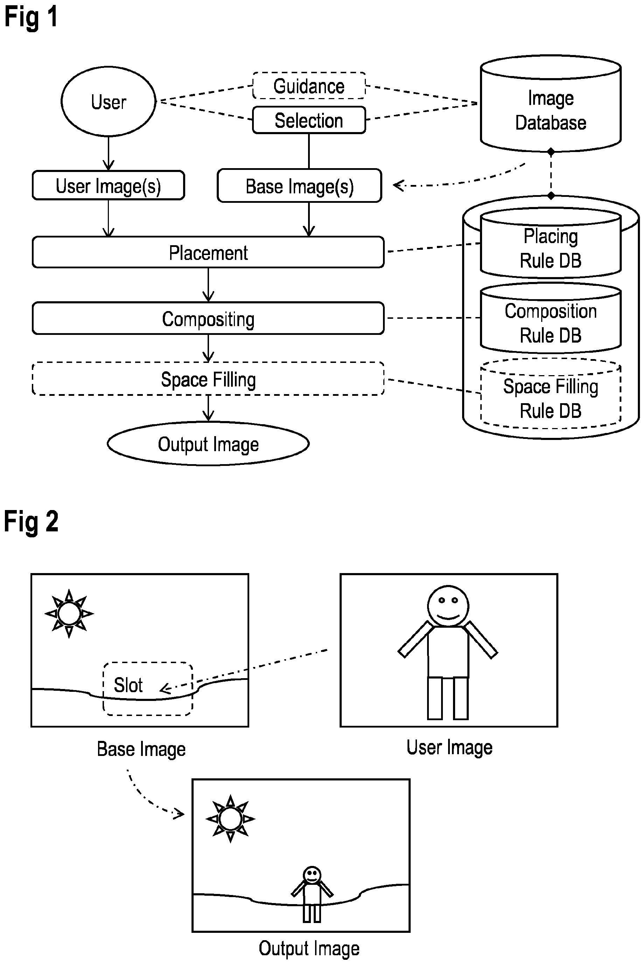

Figure 1 shows an example block diagram of the process of image production, wherein an output image is generated based on one or more user images provided by a user and on one or more base images provided from an image database. The actual production of the output image is performed in a placement step, a compositing step and, optionally, in a space-filling step. Each of these steps is based on a respective rule from a set of rule databases, the respective rule being associated with the base image or the base images to be combined. The set of rule databases comprises a placing rule database, a composition rule database and, optionally, a space-filling rule database, each associated with the corresponding production step. Each of the rules can define a single constraint or a plurality of constraints.

The sequence of the production steps is not mandatory in the method according to the improved concept. In particular, in some applications the placement step does not need to be finished before applying the compositing step. Instead, the two steps can be performed in parallel or at least in interaction with each other. The same holds for the optional space-filling step.

Going into more detail with reference to Figure 1, the user provides one or more user images, i.e. images that are selected by the user and are not necessarily preknown to the executing system. The image content of the user images can be chosen arbitrarily and is particularly not limited to images of a person. The user further can select one or more images from the image database as the base image or the base images which is or are to be combined with the user image. This is one application of the Selection step shown in Figure 1. However, the selection of the base images can also include the selection of a set of base images that e.g. are of the same type, have similar content or the like. The final selection of which image should be combined with the user image can be made based on a metric of the base images like viewing angle, brightness or the like, such that the selected base image is suitable for the selected user image. To this end, a short analysis of the user image can be performed with respect to the preselected base images.

In another selection situation, the base image may finally be selected from the image database and the user has provided or is providing a series of user images. In this case, the user image that is most suitable for the selected base image can be selected as the user image to be processed. If necessary, in a Guidance step shown in Figure 1, instructions could be given to the user on how the increase the suitability of the user image with respect to the selected base image. For example, the user provides the user images by means of a camera like a smartphone camera recording live images, such that the guidance instructions may include how to change the recorded images to increase their suitability, e.g. with respect to viewing angle, viewing position, brightness etc.

In summary, there are various possible combinations of user images and base images that can be used with the method according to the improved concept. A few of these combinations shall be named for explanatory reasons without limiting the scope of the improved concept to these combinations: A single user image is combined with a single base image from the image database; a single user image is combined with a sequence, for example a video sequence, of base images; a sequence of user images is provided, wherein one image, e.g. the most suitable image, is chosen from the sequence for combination with one or more base images; the user images are provided as a sequence, in particular a video sequence, which is combined with a static base image selected from the image database, resulting e.g. in an output sequence, in particular an output video sequence. Even if both the user images and the base images are present as image sequences like video sequences, combination is possible. In such a configuration one of the sequences should be selected as a dominant sequence and one as a subordinate sequence.

The Guidance step of Figure 1 may also include to offer the user a preselection of base images based on the user image provided and optionally some additional information. The user can select the desired base image.

In the following, for the sake of a more comprehensible description of the production steps, it will be assumed that a single user image is combined with a single base image. A transfer to the more complex image combinations will be readily apparent to the skilled person from this general description.

In the placement step the user image, or at least a section of the user image, is placed into an image slot of the selected base image. The image slot is defined by a placing rule associated with said base image in the placing rule database. Images can have one or more slots. Other images can be embedded into these slots.

Referring now to Figure 2, an example of a placement step is shown. In the upper left of Figure 2 a base image is shown with a scene, e.g. at the beach on a sunny day. An image slot is defined in the base image, denoted by the dashed block. The user image on the top right of Figure 2 shows a person who is intended to be combined with the base image. Accordingly, in the output image shown at the bottom of Figure 2, the person of the user image is inserted in the image slot, such that the person at the sunny beach is shown in the output image.

Slots can be relatively big. A big slot enables the user to embed a multitude of objects, respectively user images, or simply offers more freedom when arranging objects, as can be seen in Figure 2, where the person's position could have been varied to the left or to the right so some extent.

Referring back to the general description of Figure 1, arranging objects in unconstrained space can be ambiguous. To resolve issues, the images in the image database can have additional placement information being comprised by the placing rule, such as, e.g., on ground, in the air etc. More generally speaking, the placing rule can define a placement preference of the user image within the image slot. Furthermore, an arrangement order of an object within the image slot can be defined by the placing rule. Non-limiting examples for such an arrangement order are that a hat is on the head of a person, a person is in a car, a car is in front of a building. A placing rule can also define a probability distribution of placement of the user image or the section of the user image within the image slot. Such a probability distribution allows a less strict placement of the user image, in particular if other rules like rules from the composition rule database or the space-filling rule database are to be followed.

Image slots can also be small and space-constraining. Such slots force the embedded images to scale, transform or deform. Constrained space and a mix of materials enables the image production method according to the improved concept to implement moving hinges or bone joint systems as human body models often have.

For example, also a material consistency of at least a section of the image slot can be defined by the placing rule. For example, materials can be assigned to images or individual pixels. Soft materials can stretch or bend or compress. Rigid materials, e.g. can only be rotated, moved and scaled. However, material properties can also be reflected in other rules like in the composition rule database or the space-filling rule database.

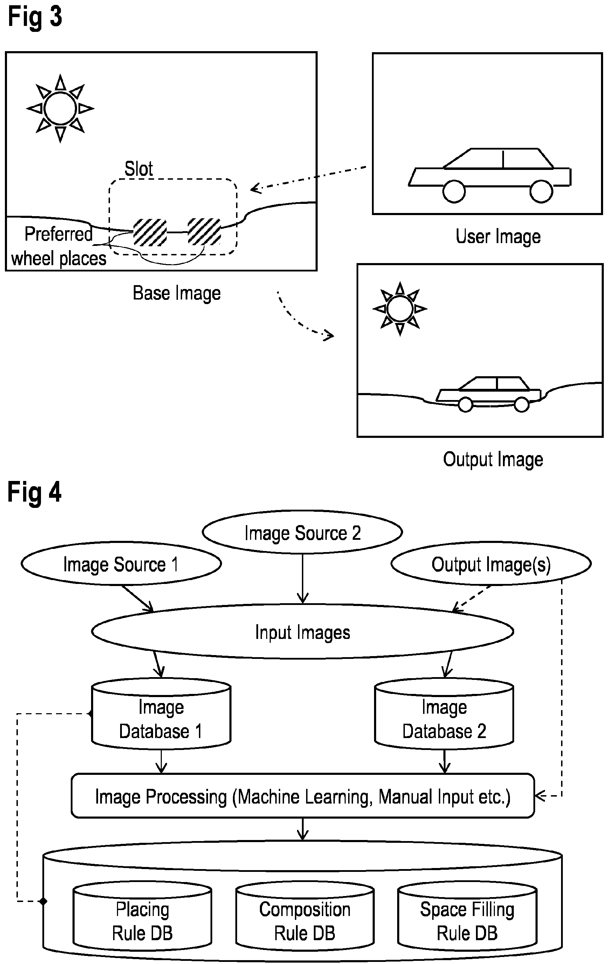

As to the placement preferences described above, Figure 3 shows an example of a preference definition within an image slot of a base image in the upper left of Figure 3. In particular, preferred wheel places, taken as an example, are defined within the image slot, which is similar to that of Figure 2. The user image in the upper right of Figure 3 is the image of a car that should appear in the base image. The resulting output image is shown in the lower right of Figure 3 with the car being placed in the base image, having its wheels at the preferred wheel places of the base image.

Referring back to Figure 1, in a compositing step the user image or the section of the user image is composited with the selected base image with respect to an overlap relation of pixels of said base image and pixels of the user image. The overlap relation is defined by a composition rule associated with the base image in the composition rule database. As mentioned before, the compositing step can be performed more or less concurrently with the placement step such that the respective rules are applied or evaluated concertedly such that potential discrepancies between the rules can be resolved. In this context it should be noted that at least some of the rules do not have to be strictly obeyed but may only give some kind of instruction how to handle, for example, different areas of the base image.

The composition rule associated with the base image may inter alia define a depth order of portions of said base image and the user image. This, for example, allows to resolve overlaps between the user image and the base image, for example by depth buffering when depth values are available for each image component. Otherwise, the correct depth order may be defined per image or depending on the material.

The composition rule may also define a transparency of portions of said base image and the user image, for example if an object of the user image is to be shown behind a window being visible in the base image or the like. The composition rule may further define a possible colour adaptation of portions of said base image and the user image and/or a possible illumination change of portions of said base image and the user image. For example, bright or illuminated parts of the base image may result in an illumination change of a user image or object placed in that area.

The effects of the composition rule can also be seen in the application examples of Figures 2 and 3. In particular, it may be defined in a composition rule database that the object, namely the person or the car, is to be arranged in front of the background defined by the base image.

Referring back to Figure 1, for some of the images in the image database there may be rule entries in the space-filling rule database. Hence, the number of images of the image database having associated rule entries in the space-filling rule database may be smaller than the number of rule entries in the placing rule database and the composition rule database.

If such a space-filling rule is present in the space-filling rule database for the selected base image, producing the output image further comprises filling at least a section of the image slot according to said space-filling rule associated with said base image, based on the user image or the section of the user image and/or on said base image. For example, the space-filling rule defines handling of a section of the base image that cannot be covered based on the user image.

According to the improved concept, the space-filling rules may be used to fill slot areas that need filling but could not be covered with inserted user images or objects. Some areas need to be filled to avoid showing background. Other areas need to be filled to avoid showing image features that are undesired.

According to the improved concept, images or materials can have a "needs to be covered" flag that may be represented in the space-filling rule. Such a flag can be set manually or determined by comparison to similar images. For example, the straps of a shirt or dress shown in a base image should be filled with skin pixels when a strapless dress, as a user image, is put on the body shown in the base image.

Preferably in all space-filling cases, an alignment procedure in the placement step may try to grow the covering image as much as possible by transformation, deformation or repeating depending on the material of the image. In a following step other views of the same image are seen and may be checked whether they contain information that could help with filling. Such pixels can be determined by geometric projection or image registration. Finally, the remaining gaps are filled by inpainting operations. Inpainting is the process of repeating pixel structures of an image to fill other areas of the image. Advanced inpainting rules can also drive the behaviour to favour transforming, respectively stretching over, inpainting.

Each rule entry in the rule databases associated with a base image may be implemented on a per pixel basis with at least one rule image having the same dimensions as the base image and a specific rule value for each image pixel. For example, the image slot can be defined by a simple logic or single-bit image having ones at pixel positions where the image slot is defined and having zeros otherwise. In a similar fashion, according to the claimed implementations, the probability values for the placement are defined at a given scale for each pixel of the base image. Of course, additional metadata can be stored in the rule databases associated with each base image or each rule image, respectively.

Based on the above description, an example of a standard sequence of actions according to the improved concept is given. First, the user selects a base image from the image database, for example a car, for augmentation. Then the user needs to capture a camera image that shows himself or another person in a suitable position to be placed in the car. Through the optional guidance step a sequence according to the improved concept can guide the user in capturing the camera image. When the viewing position and the viewing angle match, the user image is selected. When the desired image is available in more viewing configurations, for example the one that matches best is selected. An alignment step within the placement step places the user image in the image slot of the driver of the car shown in the base image. In the compositing step the correct occlusion order of the scene is found. For example, the head of the user image might be visible through the car windows, while the lower body half is hidden within the car. In the space-filling step the gaps are closed where the user's head and body do not fully cover the slot defined by the original driver shown in the base image. In this example, which inter alia makes use of the space filling database, the original driver should be replaced by the person and none of the original driver's body or head should stay visible in the output. In the method according to the improved concept, images or materials can have a "needs to be covered" flag. It can be set manually or determined by comparison to similar images. Like in the latter example, in car images the passengers likely need to be covered to serve their purpose.

The output image is displayed and/or transmitted to the user. Furthermore, the output image may be fed back into the overall system for future learning and augmentation, which will be described in the following with respect to Figure 4.

Figure 4 shows an example block diagram of a method for generating image-related databases according to the improved concept. A set of input images is fed by various image sources, shown as an example an image source 1, an image source 2 and one or more output images provided at the end of the operation shown in Figure 1.

The input images may be distributed between a first image database 1 and a second image database 2, depending on whether the images should later be available as base images or not. In particular, the images of the image database 1 can later be used in the process shown in Figure 1. However, both image databases or the comprised images, respectively, are processed in an image processing step that forms the basis for deriving rules in the placing rule database, the composition rule database and, the optionally, the space-fitting rule database.

The image processing can be performed by machine learning, manual input or the like. Depending on the desired application, the input images may represent various views of similar scenes that may be representative for the desired application. For example, referring to the example with the person in the car given above, the input images may represent various views of cars with people inside them. Through the image processing step, in particular by machine learning, the specific rules can be derived for each image of the first image database. In particular, also the information gathered from all other images is used to derive the specific rules for a single base image. Referring again to the car example, the system may learn how people are placed in a car, which parts are occluded by the driver, which parts are visible, which parts are transparent etc. This knowledge can be used to define a specific rule for a single input image that later can be used as a base image. Hence, a greater number of input images to be processed increases the quality of the rules of the final base images of the image database. Moreover, if the images are used as base images and output images are generated thereof, the resulting output images can be fed back to the image processing step in order to further increase the rule quality.

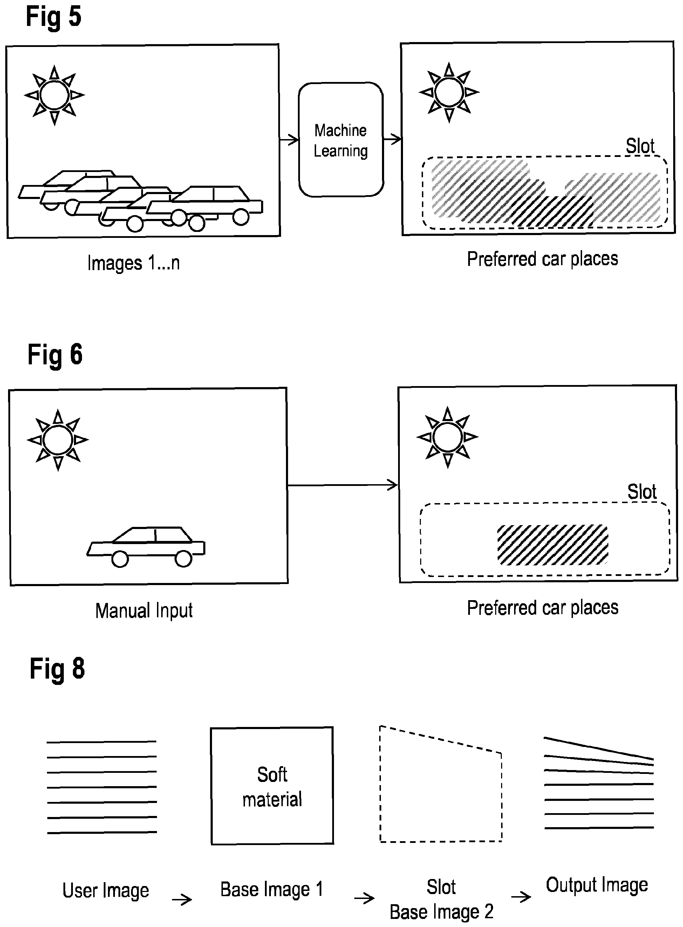

Referring now to Figure 5, the learning, respectively processing, step of Figure 4 is shown as an example with several input images 1 to n, each showing a car in a sunny scene. By way of machine learning in the image processing step, the system can learn where cars are usually placed within an image, thereby defining an image slot for the placing rule database. Furthermore, depending on a frequency of occurrence of car positions within the input images, the system learns preferred car places, in particular a probability where cars occur within the image slot, which is also represented by a rule in the placing rule database.

Referring now to Figure 6, the processing of the input images can also be performed in a manual way. For example, in Figure 6 an input image showing a car under a sunny sky is marked manually with an image slot and a preferred car place, which will be stored in the placing rule database.

As mentioned before, in particular the composition of images can be based on depth information. For example, the user image and/or the base image contain such depth information and/or three-dimensional information, allowing to differentiate which parts of the image are more in the foreground and which image parts are more in the background. This information can be used for applying respective rules to the images or even for producing output images with three-dimensional information.

For example, the base images and/or user images may already contain depth information or three-dimensional information, which may be generated in a special imaging process using, e.g. infrared imaging techniques or other 3D imaging techniques known in the art. The images may also be provided as a two-dimensional or three-dimensional video sequence or animation, from which the depth information or three-dimensional information may be extracted.

Referring back to Figure 1, the image production process can be performed in a nested way, where the final output image is produced in several steps using e.g. several base images and/or user images. For example, at least one rule out of the placing rule, the composition rule and, if present, the space-filling rule, which are associated with the base image, are associated with the output image. A further output image is produced by merging the output image with a further image based at least on the rule or rules associated with the output image.

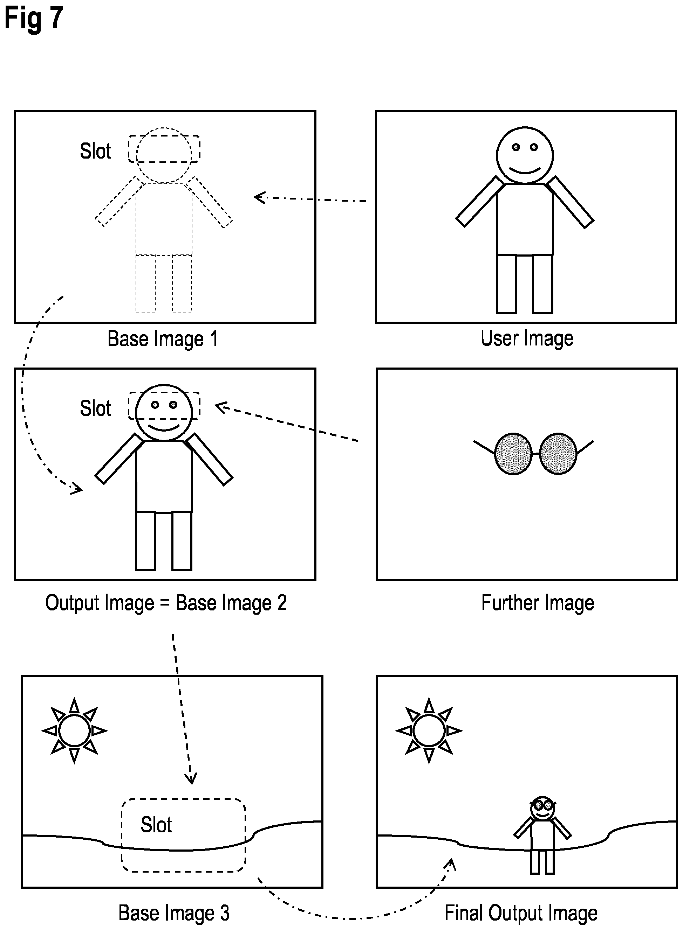

Figure 7 shows an example of such a nested operation. On the top right of Figure 7 a user image showing a person is provided. This user image is to be combined with a first base image which is only defined by the outline of a person and an image slot for definition of an eye area. The resulting output image therefore mainly consists of the person shown in the original user image and further is defined by the image slot that, so to say, is inherited from the first base image. This intermediate output image serves as a second base image, shown as base image 2 in the middle of the left side of Figure 7.

A further image showing glasses should be combined with said second base image. Furthermore, said combination of the second base image and the further image showing the glasses should be combined with a third base image shown in the bottom left of Figure 7, which shows the example beach with sunny sky already present in the examples of Figure 2 and Figure 3. Hence, in a next intermediate step, the glasses are merged with the second base image, and the resulting combined image is merged with the third base image, such that the final output image shown in the bottom right of Figure 7 shows the person of the original user image wearing the glasses of the further image at the sunny beach.

Figure 7 is an example, where the composition rule database comes into effect. In particular, the glasses will cover the user's face, whereas the user's entire body covers the beach image. Such a preset depth order is valid for a range of viewing directions, but not all. It can be extracted by machine learning methods from a set of similar images or defined manually, as explained before in conjunction with Figure 4.

Figure 8 shows a further example of a nested operation of image production. In this example, the user image is provided as a line pattern, e.g. from some clothing. The base image to be combined, shown as base image 1 in Figure 8, is defined inter alia by a material consistency, namely a soft material. This results in the pattern of the user image having the soft material definition as an intermediate result. Said intermediate result is to be combined within a slot of a second base image, shown as base image 2 in Figure 8. Due to the soft material property, the original user image will be deformed according to the shape of the slot of the second base image.

It should be noted that the latter example may only be a part of a larger image showing e.g. some clothing scene.

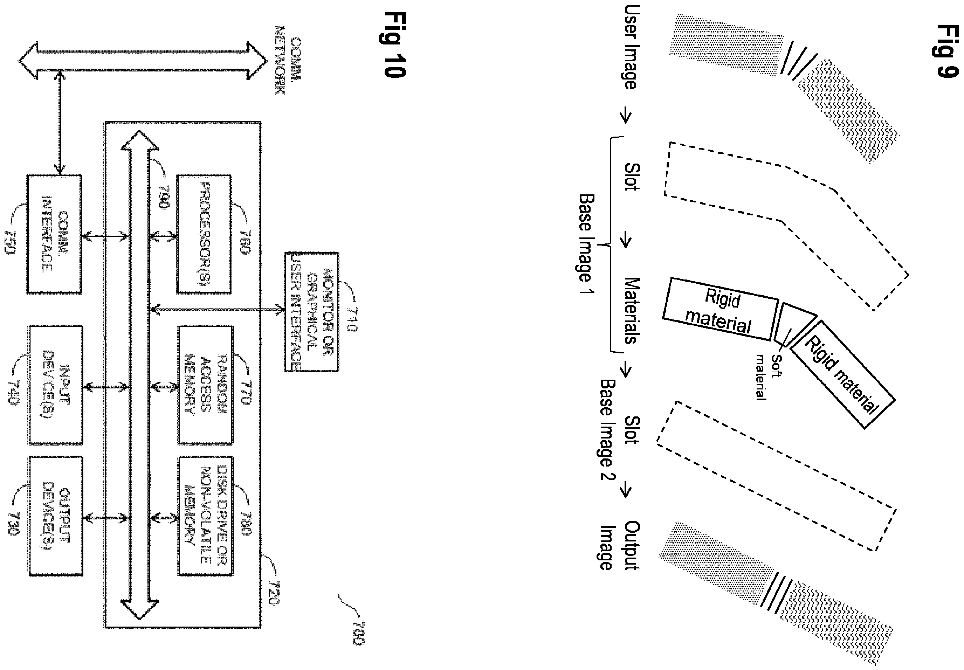

A further example of a nested operation is given in Figure 9. An input user image is defined by three areas having different patterns. Said user image is combined with a first base image, shown as base image 1 in Figure 9, having defined an image slot and several material consistencies. In particular, two elongated parts are formed from a rigid material, whereas the linking middle part is formed from a soft material. For example, such a material definition may represent an arm or a leg, where the joint, e.g. elbow or knee, is defined by the soft material. In a second combination the resulting output image combined from the user image and the first base image is to be combined with a second base image, shown as base image 2 in Figure 9. In this example, the slot is defined as a straight area, such that the angle or hinge, respectively, that is present in the user image, respectively the intermediate output image, has to be transformed, respectively straightened, to fit in the image slot of the second base image. As can be seen in the furthermost right image in Figure 9, the linking middle area of the user image defined by the lined pattern is now straightened in the output image.

In the process of Figure 9, for example, the image database is queried to find an image with a pose or an arrangement that is similar to that of the input user image. The first base image is found and the user image is embedded into the first base image by stretching and squeezing it into the first base image, while the alignment algorithm tries to minimize visible deformation artefacts. The first base image has per pixel material information that tells future alignment procedures which parts of the user image are rigid and which can bend. A combination of the user image and the first base image form a model that can be placed and animated in a natural way. Assuming that the user image represents an arm or a leg, these can be straightened by the slot of the second base image without making the body bend like a rubber doll, but in a natural way.

Replacing a rigid material in one of the examples above with a non-rigid but stiff material, advanced effects may be realized. For example, taking an image of a person as the user image, the person's body shape can be improved to be more flattering. To do so, a more athletic body image with an according slot and a "needs to be covered" material can be incorporated into the structure of the scene. In such a case the slot will be defined by a near rigid material, which allows the person's body proportions to shrink or grow slightly while maintaining the overall appearance. The algorithm will try to cover all of the athletic body image with the person's image. To keep the background from being warped, a repeating or space-fitting material can be used. As a result, no visual cues will tell an observer that the resulting augmented reality image is not real.

In further examples, a moving person in a video can be used to query the image database with every image of the user video. The image database has an entry for every possible viewing angle and body pose of a person. Each entry is assigned with, for example, a piece of clothing to generate an augmented reality fashion show video of the user.

Another example could use a still image of a person's body in combination with an image sequence from the image database that describes a moving body slot. In this way a portrait photo of a user can be converted into an animation, for example a walk at the beach or a car driving along.

Figure 10 is a block diagram of a computer system that may incorporate embodiments according to the improved concept. Figure 10 is merely illustrative of an embodiment incorporating the improved concept and does not limit the scope of the invention as recited in the claims. One of ordinary skill in the art would recognize other variations, modifications, and alternatives.

In one embodiment, computer system 700 typically includes a monitor 710, a computer 720, user output devices 730, user input devices 740, communications interface 750, and the like.

As shown in Figure 10, computer 720 may include a processor(s) 760 that communicates with a number of peripheral devices via a bus subsystem 790. These peripheral devices may include user output devices 730, user input devices 740, communications interface 750, and a storage subsystem, such as random access memory (RAM) 770 and disk drive 780.

User input devices 730 include all possible types of devices and mechanisms for inputting information to computer system 720. These may include a keyboard, a keypad, a touch screen incorporated into the display, audio input devices such as voice recognition systems, microphones, and other types of input devices. In various embodiments, user input devices 730 are typically embodied as a computer mouse, a trackball, a track pad, a joystick, wireless remote, drawing tablet, voice command system, eye tracking system, and the like. User input devices 730 typically allow a user to select objects, icons, text and the like that appear on the monitor 710 via a command such as a click of a button or the like. User input devices 730 may also include color and/or depth cameras, body shape and/or pose tracking sensors, hand tracking devices, head tracking devices or the like. User input devices 730 may particularly include a camera of a smartphone or the like. Such smartphone or other mobile device may be connected to computer 720 over a communication network connected via communications interfaces 750.

User output devices 740 include all possible types of devices and mechanisms for outputting information from computer 720. These may include a display (e.g., monitor 710), non-visual displays such as audio output devices, etc.

Communications interface 750 provides an interface to other communication networks and devices. Communications interface 750 may serve as an interface for receiving data from and transmitting data to other systems. Embodiments of communications interface 750 typically include an Ethernet card, a modem (telephone, satellite, cable, ISDN), (asynchronous) digital subscriber line (DSL) unit, FireWire interface, USB interface, and the like. For example, communications interface 750 may be coupled to a computer network, to a FireWire bus, or the like. In other embodiments, communications interfaces 750 may be physically integrated on the motherboard of computer 720, and may be a software program, such as soft DSL, or the like.

In various embodiments, computer system 700 may also include software that enables communications over a network such as the HTTP, TCP/IP, RTP/RTSP protocols, and the like.

RAM 770 and disk drive 780 are examples of tangible media configured to store data, including executable computer code, human readable code, or the like. Other types of tangible media include floppy disks, removable hard disks, optical storage media such as CD-ROMS, DVDs and bar codes, semiconductor memories such as flash memories, read-only-memories (ROMS), battery-backed volatile memories, networked storage devices, and the like. RAM 770 and disk drive 780 may be configured to store the basic programming and data constructs that provide the functionality of the improved concept.

Software code modules and instructions that provide the functionality of the improved concept may be stored in RAM 770 and disk drive 780. These software modules may be executed by processor(s) 760. RAM 770 and disk drive 780 may also provide a repository for storing data used in accordance with the present invention.

RAM 770 and disk drive 780 may include a number of memories including a main random access memory (RAM) for storage of instructions and data during program execution and a read only memory (ROM) in which fixed instructions are stored. RAM 770 and disk drive 780 may include a file storage subsystem providing persistent (non-volatile) storage for program and data files. RAM 770 and disk drive 780 may also include removable storage systems, such as removable flash memory.

Bus subsystem 790 provides a mechanism for letting the various components and subsystems of computer 720 communicate with each other as intended. Although bus subsystem 790 is shown schematically as a single bus, alternative embodiments of the bus subsystem may utilize multiple busses.

Figure 10 is representative of a computer system capable of embodying the improved concept. It will be readily apparent to one of ordinary skill in the art that many other hardware and software configurations are suitable for such use. For example, the computer may be a mobile device, in particular a mobile phone, or desktop, portable, rack-mounted or tablet configuration. Additionally, the computer may be a series of networked computers.

Various embodiments of the improved concept can be implemented in the form of logic in software or hardware or a combination of both. The logic may be stored in a computer readable or machine-readable storage medium as a set of instructions adapted to direct a processor of a computer system to perform a set of steps disclosed in embodiments of the improved concept. The logic may form part of a computer program product adapted to direct an information-processing device to automatically perform a set of steps disclosed in embodiments of the improved concept.

The specification and drawings are, accordingly, to be regarded in an illustrative rather than a restrictive sense. However, it will be evident that various modifications and changes may be made thereunto without departing from the scope of the invention as set forth in the claims.

## Claims

1. A computer implemented method for producing output images based on a user image and a base image, the method comprising
- providing, in a computer system, an image database that comprises a plurality of processed images and a set of rule databases associated with the image database, the set of rule databases comprising a placing rule database and a composition rule database, wherein for each of said processed images a rule entry exists in each of the placing rule database and the composition rule database;
- providing the user image to the computer system, with the image database and the set of the rule databases being provided in advance;
- selecting, with the computer system, the base image from the image database;
- producing, in the computer system, an output image by
- the computer system placing the user image or at least a section of the user image into an image slot of the selected base image, said image slot being defined by a placing rule associated with said base image in the placing rule database, wherein the placing rule defines a position of the image slot within said base image, and further defines a probability distribution of placement of the user image or the section of the user image within the image slot, each rule entry for the probability distribution in the placing rule database being implemented on a per pixel basis with at least one rule image having the same dimensions as the associated base image and a specific probability value for each image pixel of the at least one rule image; and
- the computer system compositing the user image or the section of the user image with said base image with respect to an overlap relation of pixels of said base image and pixels of the user image, said overlap relation being defined by a composition rule associated with said base image in the composition rule database;
- associating, in the computer system, at least one rule out of the placing rule and the composition rule, which are associated with said base image, with the output image; and
- producing, in the computer system, a further output image by merging the output image with a further image, which is provided to the computer system, based at least on the rule or rules associated with the output image.

2. The method according to claim 1,
wherein the placing rule further defines at least one of the following:
- a placement preference of the user image within the image slot;
- an arrangement order of an object within the image slot; and
- a material consistency of at least a section of the image slot.

3. The method according to claim 1 or 2,
wherein the composition rule defines at least one of the following:
- a depth order of portions of said base image and the user image;
- a transparency of portions of said base image and the user image;
- a possible color adaptation of portions of said base image and the user image; and
- a possible illumination change of portions of said base image and the user image.

4. The method according to one of claims 1 to 3,
wherein for the selected base image a rule entry exists in a space filling rule database comprised by the set of rule databases and wherein producing the output image further comprises the computer system filling at least a section of the image slot according to a space filling rule associated with said base image in the space filling rule database, based on the user image or the section of the user image and/or on said base image.

5. The method according to claim 4,
wherein the filling step comprises at least one of the following:
- deformation and/or transformation of the user image;
- non-rigid image alignment based on the user image and/or said base image;
- physical simulation;
- dynamic programming;
- inpainting;
- repeating;
- differential mesh editing; and
- image warping of the user image.

6. The method according to one of claims 1 to 5,
wherein the user image and/or the base image contain depth information and/or 3-dimensional information.

7. The method according to claim 6,
wherein the compositing step and/or the composition rule are based on the depth information and/or 3-dimensional information.

8. The method according to one of claims 1 to 7,
wherein the selecting step and the producing step are performed for each base image of a set or sequence of base images from the image database, such that a set or sequence of output images is produced based on the user image.

9. The method according to one of claims 1 to 8,
further comprising selecting the user image from a set or sequence of selectable user images based on the selected base image.

10. The method according to claim 9,
wherein quality information is output based on an evaluation of the selectable user images until one of the selectable user images is selected as the user image.

11. The method according to one of claims 1 to 10,
wherein both the placing rule and the composition rule, which are associated with said base image, are associated with the output image, and wherein the output image is used as a further base image, the method further comprising:
- providing the further image as a further user image; and
- producing the further output image by
- placing the further user image or at least a section of the further user image into an image slot of the further base image, said image slot being defined by the placing rule associated with said further base image; and
- compositing the further user image or the section of the further user image with the further base image with respect to an overlap relation of pixels of the further base image and pixels of the further user image, said overlap relation being defined by the composition rule associated with the further base image.

12. The method according to one of claims 1 to 10,
wherein the further image is selected as a further base image from the image database and wherein producing the further output image comprises:
- placing the output image or at least a section of the output image into an image slot of said further base image, said image slot being defined by a placing rule associated with said further base image in the placing rule database; and
- compositing the output image or the section of the output image with said further base image with respect to an overlap relation of pixels of said further base image and pixels of the output image, said overlap relation being defined by a composition rule associated with said further base image in the composition rule database.

13. The method according to one of claims 1 to 12,
further comprising a generation of the image database by the following steps:
- processing a plurality of input images;
- selecting a subset of the plurality of input images;
- for each input image of said subset:
- storing said input image in the image database;
- deriving, based on the processing, a placing rule and associating said placing rule with said input image in the placing rule database; and
- deriving, based on the processing, a composition rule and associating said composition rule with said input image in the composition rule database.

14. The method according to one of claims 1 to 13,
wherein the output image, which is produced with the output image producing step, is used for updating one or more entries in at least one of the image database, the placing rule database and the composition rule database.

15. A computer system (700) for producing output images based on a user image provided by a user and a base image, the system comprising a processor (760) that is configured for
- selecting the base image from an image database that comprises a plurality of processed images and a set of rule databases associated with the image database, the set of rule databases comprising a placing rule database and a composition rule database, wherein for each of said processed images a rule entry exists in each of the placing rule database and the composition rule database;
- producing the output image by
- placing the user image or at least a section of the user image into an image slot of the selected base image, said image slot being defined by a placing rule associated with said base image in the placing rule database, wherein the placing rule defines a position of the image slot within said base image, and further defines a probability distribution of placement of the user image or the section of the user image within the image slot, each rule entry for the probability distribution in the placing rule database being implemented on a per pixel basis with at least one rule image having the same dimensions as the associated base image and a specific probability value for each image pixel of the at least one rule image; and
- compositing the user image or the section of the user image with said base image with respect to an overlap relation of pixels of said base image and pixels of the user image, said overlap relation being defined by a composition rule associated with said base image in the composition rule database
- associating at least one rule out of the placing rule and the composition rule, which are associated with said base image, with the output image; and
- producing a further output image by merging the output image with a further image based at least on the rule or rules associated with the output image.

## Patentansprüche

1. Computerimplementiertes Verfahren zum Erzeugen von Ausgabebildern auf der Grundlage eines Benutzerbildes und eines Basisbildes, wobei das Verfahren folgendes umfasst
- Bereitstellen, in einem Computersystem, einer Bilddatenbank, die eine Vielzahl von verarbeiteten Bildern und einen Satz von Regeldatenbanken umfasst, die mit der Bilddatenbank assoziiert sind, wobei der Satz von Regeldatenbanken eine Platzierungsregel-Datenbank und eine Kompositionsregel-Datenbank umfasst, wobei für jedes der verarbeiteten Bilder ein Regeleintrag in jeder der Platzierungsregel-Datenbank und der Kompositionsregel-Datenbank existiert;
- Bereitstellen des Benutzerbildes an das Computersystem, wobei die Bilddatenbank und der Satz der Regeldatenbanken im Voraus bereitgestellt sind;
- Auswählen, mit dem Computersystem, des Basisbildes aus der Bilddatenbank;
- Erzeugen, in dem Computersystem, eines Ausgabebildes indem
- das Computersystem das Benutzerbild oder zumindest einen Abschnitt des Benutzerbildes in einen Bildplatz des ausgewählten Basisbildes platziert, wobei der Bildplatz durch eine Platzierungsregel definiert ist, die mit dem Basisbild in der Platzierungsregel-Datenbank assoziiert ist, wobei die Platzierungsregel eine Position des Bildplatzes innerhalb des Basisbildes definiert, und ferner eine Wahrscheinlichkeitsverteilung der Platzierung des Benutzerbildes oder des Abschnitts des Benutzerbildes innerhalb des Bildplatzes definiert, wobei jeder Regeleintrag für die Wahrscheinlichkeitsverteilung in der Platzierungsregel-Datenbank auf einer Pro-Pixel-Basis mit mindestens einem Regelbild implementiert ist, das die gleichen Abmessungen wie das assoziierte Basisbild und einen spezifischen Wahrscheinlichkeitswert für jeden Bildpixel des mindestens einen Regelbildes aufweist; und
- das Computersystem das Benutzerbild oder den Abschnitt des Benutzerbildes mit dem Basisbild in Bezug auf eine Überlappungsbeziehung von Pixeln des Basisbildes und Pixeln des Benutzerbildes zusammensetzt, wobei die Überlappungsbeziehung durch eine Kompositionsregel definiert ist, die mit dem Basisbild in der Kompositionsregel-Datenbank assoziiert ist;
- Assoziieren, in dem Computersystem, mindestens einer Regel aus der Platzierungsregel und der Kompositionsregel, die mit dem Basisbild assoziiert sind, mit dem Ausgabebild; und
- Erzeugen eines weiteren Ausgabebildes in dem Computersystem durch Zusammenfügen des Ausgabebildes mit einem weiteren Bild, das dem Computersystem bereitgestellt wird, zumindest basierend auf der Regel oder den Regeln, die mit dem Ausgabebild assoziiert sind.

2. Das Verfahren gemäß Anspruch 1,
wobei die Platzierungsregel ferner mindestens eines der folgenden definiert
- eine Platzierungspräferenz des Benutzerbildes innerhalb des Bildplatzes;
- eine Anordnungsreihenfolge eines Objekts innerhalb des Bildplatzes; und
- eine Materialkonsistenz zumindest eines Abschnitts des Bildplatzes.

3. Das Verfahren gemäß Anspruch 1 oder 2,
wobei die Kompositionsregel zumindest eines der folgenden definiert:
- eine Tiefenreihenfolge von Teilen des Basisbildes und des Benutzerbildes
- eine Transparenz von Teilen des Basisbildes und des Benutzerbildes
- eine mögliche Farbanpassung von Teilen des Basisbildes und des Benutzerbildes; und
- eine mögliche Beleuchtungsänderung von Teilen des Basisbildes und des Benutzerbildes.

4. Das Verfahren gemäß einem der Ansprüche 1 bis 3,
wobei für das ausgewählte Basisbild ein Regeleintrag in einer Raumfüll-Regeldatenbank vorhanden ist, die von dem Satz von Regeldatenbanken umfasst ist, und wobei das Erzeugen des Ausgabebildes ferner aufweist, dass das Computersystem zumindest einen Abschnitt des Bildplatzes gemäß einer Raumfüll-Regel füllt, die mit dem Basisbild in der Raumfüll-Regeldatenbank assoziiert ist, basierend auf dem Benutzerbild oder dem Abschnitt des Benutzerbildes und/oder auf dem Basisbild.

5. Das Verfahren gemäß Anspruch 4,
wobei der Schritt des Füllens zumindest eines der folgenden umfasst:
- Verformung und/oder Transformation des Benutzerbildes;
- nicht starre Bildausrichtung auf der Basis des Benutzerbildes und/oder des Basisbildes
- physikalische Simulation;
- dynamische Programmierung;
- Einfärben;
- Wiederholung;
- differentielle Gitterbearbeitung; und
- Bildverzerrung des Benutzerbildes.

6. Das Verfahren gemäß einem der Ansprüche 1 bis 5,
wobei das Benutzerbild und/oder das Basisbild Tiefeninformationen und/oder 3-dimensionale Informationen enthalten.

7. Das Verfahren gemäß Anspruch 6,
wobei der Schritt des Zusammensetzens und/oder die Kompositionsregel auf den Tiefeninformationen und/oder den 3-dimensionalen Informationen basieren.

8. Das Verfahren gemäß einem der Ansprüche 1 bis 7,
wobei der Schritt des Auswählens und der Schritt des Erzeugens für jedes Basisbild eines Satzes oder einer Folge von Basisbildern aus der Bilddatenbank durchgeführt werden, so dass ein Satz oder eine Folge von Ausgabebildern basierend auf dem Benutzerbild erzeugt wird.

9. Das Verfahren gemäß einem der Ansprüche 1 bis 8, ferner umfassend das Auswählen des Benutzerbildes aus einem Satz oder einer Folge von auswählbaren Benutzerbildern auf der Grundlage des ausgewählten Basisbildes.

10. Das Verfahren gemäß Anspruch 9,
wobei Qualitätsinformationen auf der Grundlage einer Auswertung der auswählbaren Benutzerbilder ausgegeben werden, bis eines der auswählbaren Benutzerbilder als das Benutzerbild ausgewählt ist.

11. Das Verfahren gemäß einem der Ansprüche 1 bis 10,
wobei sowohl die Platzierungsregel als auch die Kompositionsregel, die mit dem Basisbild assoziiert sind, mit dem Ausgabebild assoziiert sind, und wobei das Ausgabebild als weiteres Basisbild verwendet wird, wobei das Verfahren ferner umfasst:
- Bereitstellen des weiteren Bildes als ein weiteres Benutzerbild; und
- Erzeugen des weiteren Ausgabebildes durch
- Platzieren des weiteren Benutzerbildes oder zumindest eines Abschnitts des weiteren Benutzerbildes in einen Bildplatz des weiteren Basisbildes, wobei der Bildplatz durch die dem weiteren Basisbild assoziierte Platzierungsregel definiert ist; und
- Zusammensetzen des weiteren Benutzerbildes oder des Abschnitts des weiteren Benutzerbildes mit dem weiteren Basisbild in Bezug auf eine Überlappungsbeziehung von Pixeln des weiteren Basisbildes und Pixeln des weiteren Benutzerbildes, wobei die Überlappungsbeziehung durch die Kompositionsregel definiert ist, die dem weiteren Basisbild zugeordnet ist.

12. Das Verfahren gemäß einem der Ansprüche 1 bis 10,
wobei das weitere Bild als ein weiteres Basisbild aus der Bilddatenbank ausgewählt wird und wobei das Erzeugen des weiteren Ausgabebildes umfasst:
- Platzieren des Ausgabebildes oder zumindest eines Abschnitts des Ausgabebildes in einen Bildplatz des weiteren Basisbildes, wobei der Bildplatz durch eine dem weiteren Basisbild assoziierte Platzierungsregel in der Platzierungsregel-Datenbank definiert ist; und
- Zusammensetzen des Ausgabebildes oder des Abschnitts des Ausgabebildes mit dem weiteren Basisbild in Bezug auf eine Überlappungsbeziehung von Pixeln des weiteren Basisbildes und Pixeln des Ausgabebildes, wobei die Überlappungsbeziehung durch eine Kompositionsregel definiert ist, die dem weiteren Basisbild in der Kompositionsregel-Datenbank zugeordnet ist.

13. Das Verfahren gemäß einem der Ansprüche 1 bis 12, das ferner eine Erzeugung der Bilddatenbank durch die folgenden Schritte aufweist:
- Verarbeiten einer Mehrzahl von Eingabebildern;
- Auswählen einer Teilmenge der Vielzahl von Eingangsbildern;
- für jedes Eingabebild der Teilmenge:
- Speichern des Eingangsbildes in der Bilddatenbank;
- Ableiten, basierend auf dem Verarbeiten, einer Platzierungsregel und Assoziieren der Platzierungsregel mit dem Eingangsbild in der Platzierungsregel-Datenbank; und
- Ableiten, basierend auf dem Verarbeiten, einer Kompositionsregel und Assoziieren der Kompositionsregel mit dem Eingangsbild in der Kompositionsregel-Datenbank.

14. Das Verfahren gemäß einem der Ansprüche 1 bis 13, wobei das Ausgabebild, das mit dem Schritt des Erzeugens des Ausgabebildes erzeugt wird, zum Aktualisieren eines oder mehrerer Einträge in zumindest einer der Bilddatenbank, der Platzierungsregel-Datenbank und der Kompositionsregel-Datenbank verwendet wird.

15. Computersystem (700) zum Erzeugen von Ausgabebildern basierend auf einem von einem Benutzer bereitgestellten Benutzerbild und einem Basisbild, wobei das System einen Prozessor (760) umfasst, der eingerichtet ist zum
- Auswählen des Basisbildes aus einer Bilddatenbank, die eine Vielzahl von verarbeiteten Bildern und einen Satz von Regeldatenbanken umfasst, die mit der Bilddatenbank assoziiert sind, wobei der Satz von Regeldatenbanken eine Platzierungsregel-Datenbank und eine Kompositionsregel-Datenbank umfasst, wobei für jedes der verarbeiteten Bilder ein Regeleintrag in jeder der Platzierungsregel-Datenbank und der Kompositionsregel-Datenbank existiert;
- Erzeugen des Ausgabebildes durch
- Platzieren des Benutzerbildes oder zumindest eines Abschnitts des Benutzerbildes in einen Bildplatz des ausgewählten Basisbildes, wobei der Bildplatz durch eine Platzierungsregel definiert ist, die mit dem Basisbild in der Platzierungsregel-Datenbank assoziiert ist, wobei die Platzierungsregel eine Position des Bildplatzes innerhalb des Basisbildes definiert, und ferner eine Wahrscheinlichkeitsverteilung der Platzierung des Benutzerbildes oder des Abschnitts des Benutzerbildes innerhalb des Bildplatzes definiert, wobei jeder Regeleintrag für die Wahrscheinlichkeitsverteilung in der Platzierungsregel-Datenbank auf einer Pro-Pixel-Basis mit mindestens einem Regelbild implementiert ist, das die gleichen Abmessungen wie das assoziierte Basisbild und einen spezifischen Wahrscheinlichkeitswert für jeden Bildpixel des mindestens einen Regelbildes aufweist; und
- Zusammensetzen des Benutzerbildes oder des Abschnitts des Benutzerbildes mit dem Basisbild in Bezug auf eine Überlappungsbeziehung von Pixeln des Basisbildes und Pixeln des Benutzerbildes, wobei die Überlappungsbeziehung durch eine Kompositionsregel definiert ist, die dem Basisbild in der Kompositionsregel-Datenbank zugeordnet ist
- Assoziieren mindestens einer Regel aus der Platzierungsregel und der Kompositionsregel, die mit dem Basisbild assoziiert sind, mit dem Ausgabebild; und
- Erzeugen eines weiteren Ausgabebildes durch Zusammenfügen des Ausgabebildes mit einem weiteren Bild zumindest basierend auf der Regel oder den Regeln, die mit dem Ausgabebild assoziiert sind.

## Revendications

1. Un procédé mis en œuvre par ordinateur pour produire des images de sortie basées sur une image d'utilisateur et une image de base, le procédé comprenant
- fournir, dans un système informatique, une base de données d'images qui comprend une pluralité d'images traitées et un ensemble de bases de données de règles associées à la base de données d'images, l'ensemble de bases de données de règles comprenant une base de données de règles de placement et une base de données de règles de composition, dans lequel, pour chacune desdites images traitées, une entrée de règle existe dans chacune des bases de données de règles de placement et de règles de composition ;
- fournir l'image de l'utilisateur au système informatique, la base de données d'images et l'ensemble des bases de données de règles étant fournis à l'avance ;
- sélectionner, avec le système informatique, l'image de base à partir de la base de données d'images ;
- produire, dans le système informatique, une image de sortie en
- le système informatique plaçant l'image de l'utilisateur ou au moins une section de l'image de l'utilisateur dans une fente d'image de l'image de base sélectionnée, ladite fente d'image étant définie par une règle de placement associée à ladite image de base dans la base de données de règles de placement, dans laquelle la règle de placement définit une position de la fente d'image dans ladite image de base, et définit en outre une distribution de probabilité de placement de l'image de l'utilisateur ou de la section de l'image de l'utilisateur dans le fente d'image, chaque entrée de règle pour la distribution de probabilité dans la base de données des règles de placement étant mise en œuvre sur une base par pixel avec au moins une image de règle ayant les mêmes dimensions que l'image de base associée et une valeur de probabilité spécifique pour chaque pixel de l'au moins une image de règle ; et
- le système informatique composant l'image de l'utilisateur ou la section de l'image de l'utilisateur avec ladite image de base en ce qui concerne une relation de chevauchement des pixels de ladite image de base et des pixels de l'image de l'utilisateur, ladite relation de chevauchement étant définie par une règle de composition associée à ladite image de base dans la base de données des règles de composition ;
- associer, dans le système informatique, au moins une règle parmi la règle de placement et la règle de composition, qui sont associées à ladite image de base, à l'image de sortie ; et
- produire, dans le système informatique, une autre image de sortie en fusionnant l'image de sortie avec une autre image, qui est fournie au système informatique, en se basant au moins sur la ou les règles associées à l'image de sortie.

2. Le procédé selon la revendication 1,
où la règle de placement définit en outre au moins l'un des éléments suivants :
- une préférence de placement de l'image de l'utilisateur dans la fente d'image ;
- un ordre d'arrangement d'un objet dans la fente de l'image ; et
- une consistance matérielle d'au moins une section de la fente de l'image.

3. Le procédé selon la revendication 1 ou 2,
où la règle de composition définit au moins l'un des éléments suivants :
- un ordre de profondeur des parties de ladite image de base et de l'image de l'utilisateur ;
- une transparence des parties de ladite image de base et de l'image de l'utilisateur ;
- une éventuelle adaptation des couleurs de parties de ladite image de base et de l'image de l'utilisateur ; et
- un éventuel changement d'illumination de parties de ladite image de base et de l'image de l'utilisateur.

4. Le procédé selon l'une des revendications 1 à 3,
dans lequel, pour l'image de base sélectionnée, une entrée de règle existe dans une base de données de règles de remplissage d'espace comprise par l'ensemble des bases de données de règles et dans lequel la production de l'image de sortie comprend en outre le fait que le système informatique remplit au moins une section de la fente de l'image selon une règle de remplissage d'espace associée à ladite image de base dans la base de données de règles de remplissage d'espace, sur la base de l'image de l'utilisateur ou de la section de l'image de l'utilisateur et/ou de ladite image de base.

5. Le procédé selon la revendication 4,
dans laquelle l'étape de remplissage comprend au moins l'un des éléments suivants :
- déformation et/ou transformation de l'image de l'utilisateur ;
- alignement d'image non rigide basé sur l'image de l'utilisateur et/ou ladite image de base ;
- simulation physique ;
- programmation dynamique ;
- l'inpaintage ;
- répétition ;
- l'édition différentielle de maillage ; et
- déformation de l'image de l'utilisateur.

6. Le procédé selon l'une des revendications 1 à 5,
où l'image de l'utilisateur et/ou l'image de base contiennent des informations de profondeur et/ou des informations tridimensionnelles.

7. Le procédé selon la revendication 6,
où l'étape de composition et/ou la règle de composition sont basées sur les informations de profondeur et/ou les informations tridimensionnelles.

8. Le procédé selon l'une des revendications 1 à 7,
dans laquelle l'étape de sélection et l'étape de production sont effectuées pour chaque image de base d'un ensemble ou d'une séquence d'images de base provenant de la base de données d'images, de telle sorte qu'un ensemble ou une séquence d'images de sortie est produit(e) sur la base de l'image de l'utilisateur.

9. Le procédé selon l'une des revendications 1 à 8, comprenant en outre la sélection de l'image de l'utilisateur à partir d'un ensemble ou d'une séquence d'images de l'utilisateur sélectionnables en fonction de l'image de base sélectionnée.

10. Le procédé selon la revendication 9,
dans lequel des informations de qualité sont produites sur la base d'une évaluation des images utilisateur sélectionnables jusqu'à ce que l'une des images utilisateur sélectionnables soit sélectionnée comme image utilisateur.

11. Le procédé selon l'une des revendications 1 à 10,
dans lequel la règle de placement et la règle de composition, qui sont associées à ladite image de base, sont toutes deux associées à l'image de sortie, et dans lequel l'image de sortie est utilisée comme autre image de base, le procédé comprenant en outre :
- fournir l'image supplémentaire en tant qu'image d'utilisateur supplémentaire ; et
- produire l'image de sortie supplémentaire en
- placer l'image d'utilisateur supplémentaire ou au moins une section de l'image d'utilisateur supplémentaire dans une fente d'image de l'image de base supplémentaire, ladite fente d'image étant définie par la règle de placement associée à ladite image de base supplémentaire ; et
- composer l'autre image d'utilisateur ou la section de l'autre image d'utilisateur avec l'autre image de base en ce qui concerne une relation de chevauchement des pixels de l'autre image de base et des pixels de l'autre image d'utilisateur, ladite relation de chevauchement étant définie par la règle de composition associée à l'autre image de base.

12. Le procédé selon l'une des revendications 1 à 10,
dans laquelle l'image supplémentaire est sélectionnée comme image de base supplémentaire dans la base de données d'images et dans laquelle la production de l'image de sortie supplémentaire comprend :
- placer l'image de sortie ou au moins une section de l'image de sortie dans une fente d'image de ladite autre image de base, ladite fente d'image étant définie par une règle de placement associée à ladite autre image de base dans la base de données de règles de placement ; et
- composer l'image de sortie ou la section de l'image de sortie avec ladite autre image de base en ce qui concerne une relation de chevauchement des pixels de ladite autre image de base et des pixels de l'image de sortie, ladite relation de chevauchement étant définie par une règle de composition associée à ladite autre image de base dans la base de données des règles de composition.

13. Le procédé selon l'une des revendications 1 à 12, comprenant en outre une génération de la base de données d'images par les étapes suivantes :
- traiter une pluralité d'images d'entrée ;
- sélectionner un sous-ensemble de la pluralité d'images d'entrée ;
- pour chaque image d'entrée dudit sous-ensemble :
- stocker ladite image d'entrée dans la base de données d'images ;
- dériver, sur la base du traitement, une règle de placement et associer ladite règle de placement à ladite image d'entrée dans la base de données de règles de placement ; et
- dériver, sur la base du traitement, une règle de composition et associer ladite règle de composition à ladite image d'entrée dans la base de données des règles de composition.

14. Le procédé selon l'une des revendications 1 à 13,
dans laquelle l'image de sortie, qui est produite avec l'étape de production de l'image de sortie, est utilisée pour actualiser une ou plusieurs entrées dans au moins une des bases de données d'images, de règles de placement et de règles de composition.

15. Un système informatique (700) pour produire des images de sortie basées sur une image d'utilisateur fournie par un utilisateur et une image de base, le système comprenant un processeur (760) qui est configuré pour
- sélectionner l'image de base à partir d'une base de données d'images qui comprend une pluralité d'images traitées et un ensemble de bases de données de règles associées à la base de données d'images, l'ensemble de bases de données de règles comprenant une base de données de règles de placement et une base de données de règles de composition, dans lequel, pour chacune desdites images traitées, une entrée de règle existe dans chacune des bases de données de règles de placement et de règles de composition ;
- produire l'image de sortie en
- placer l'image de l'utilisateur ou au moins une section de l'image de l'utilisateur dans une fente d'image de l'image de base sélectionnée, ladite fente d'image étant définie par une règle de placement associée à ladite image de base dans la base de données de règles de placement, dans laquelle la règle de placement définit une position de la fente d'image dans ladite image de base, et définit en outre une distribution de probabilité de placement de l'image de l'utilisateur ou de la section de l'image de l'utilisateur dans la fente de l'image, chaque entrée de règle pour la distribution de probabilité dans la base de données des règles de placement étant mise en œuvre sur une base par pixel avec au moins une image de règle ayant les mêmes dimensions que l'image de base associée et une valeur de probabilité spécifique pour chaque pixel de l'au moins une image de règle ; et
- composer l'image de l'utilisateur ou la section de l'image de l'utilisateur avec ladite image de base en ce qui concerne une relation de chevauchement des pixels de ladite image de base et des pixels de l'image de l'utilisateur, ladite relation de chevauchement étant définie par une règle de composition associée à ladite image de base dans la base de données des règles de composition
- associer à l'image de sortie au moins une règle parmi la règle de placement et la règle de composition, qui sont associées à ladite image de base ; et
- produire une autre image de sortie en fusionnant l'image de sortie avec une autre image basée au moins sur la ou les règles associées à l'image de sortie.
